# EUROPÄISCHE PATENTSCHRIFT

(11) **EP 1 635 076 B1**
(45) Veröffentlichungstag und Bekanntmachung des Hinweises auf die Patenterteilung: **14.03.2007**
(21) Anmeldenummer: 05108354.1
(22) Anmeldetag: 12.09.2005
(51) Int. Cl.: F16B 9/02, F16B 9/00

(54) **Befestigungsmittel für Pfosten**
Means of mounting for posts
Moyens du montage pour des poteaux

(30) Priorität: 10.09.2004 DE 102004044373
(43) Veröffentlichungstag der Anmeldung: 15.03.2006
(73) Patentinhaber: Hünnebeck GmbH, 40885 Ratingen (DE)
(72) Erfinder: Schwanekamp, Wolfgang, 47167, Duisburg (DE); Damsgaard, Rene, 8450, Hammel (DK)
(74) Vertreter: Gille Hrabal Struck Neidlein Prop Roos

(56) Entgegenhaltungen:
- CA-A1- 2 029 156
- FR-A- 2 682 724
- US-B1- 6 264 394

## Beschreibung

Die Erfindung betrifft ein Befestigungsmittel für Pfosten an Flächen, insbesondere zum Halten einer geländerartigen provisorischen Absturzsicherung auf Baustellen, sowie ein Verfahren zum Befestigen desselben (US-6264394 B1).

Bei Neubauten und Sanierungen ist es üblich, provisorische Absturzabsicherungen, beispielsweise in Gestalt von Geländern mit Horizontal- und Vertikalstreben zu errichten. Die Verankerung der Vertikalstreben erfolgt dabei üblicherweise im Boden, beispielsweise der neu errichteten Betondecke oder -wand. In der Regel werden die Vertikalpfosten nicht direkt an der Fläche befestigt, sondern man verwendet Fußstücke, in die die eigentlichen Pfosten eingesteckt und verriegelt werden können, Die Fußstücke werden meist über Dübel in eine Bohrung in der Fläche durch Einschrauben befestigt,

Ein aus dem Stand der Technik bekanntes Fußstück besteht aus einem Vierkantprofil, in das der Pfosten eingesteckt werden kann, einem darunter angeordneten tellerartigen Element, welches die Standsicherheit des Fußstücks durch Verbreiterung seiner Grundfläche erhöht und einem fest mit dem Fußstück verbundenen Gewindestück, welches in die mit einem Dübel versehenen Öffnung der Fläche hineingeschraubt werden kann. Der Fuß sitzt naturgemäß erst dann fest, wenn der Teller fest gegen den Untergrund drückt, Die Ausrichtung des fixierten Fußes ist daher reiner Zufall. Um jedoch in den Pfosten die Horizontalstreben, (üblicherweise: Geländerholm, Zwischenholm und Bordbrett) einlegen zu können, ist oftmals eine Stellung des Fußes notwendig, die von der Stellung im fixierten Zustand abweicht. Daher muss der fixierte Fuß typischerweise bis zu einer viertel oder halben Umredung gelockert werden, um das Einlegen der Vertikalstreben zu ermöglichen. Dabei hat das Fußstück jedoch Spiel und die Absturzsicherung ist beweglich, was das Vertrauen darin schmälert.

Es ist daher Aufgabe der Erfindung verbesserte Befestigungsmittel für Pfosten bzw, ein Verfahren zum Befestigen von Pfosten bereitzustellen.

Diese Aufgabe wird gelöst durch ein Befestigungsmittel entsprechend Anspruch 1. Vorteilhafte Ausgestaltungen der Erfindung sind Gegenstand der Unteransprüche

Erfindungsgemäß ist zunächst vorgesehen, dass ein Fixieren der Befestigungsmittel für Pfosten in Bezug auf den Untergrund ohne das Verdrehen des Pfostens erfolgen kann. Daher können die Pfosten zunächst optimal in Bezug auf die mit ihnen zu verbindenden Horizontalträger ausgerichtet werden, Erst danach erfolgt ein Verspannen der im Untergrund befestigten Verankerungsmittel gegen den Pfosten. Beim Stand der Technik war es dagegen notwendig, den gesamten Pfosten zu verdrehen um dadurch eine Fixierung herbeizuführen. Die Horizontalträger, d, h, beispielsweise Geländerstangen, Gitter, etc können sogar vor der Fixierung des Pfostens eingelegt werden. Deshalb können diese besonders fest und spielfrei mit dem Pfosten verbunden sein.

Pfosten im Sinne der Erfindung bedeutet nicht nur ein Pfosten in seiner ganzen Länge, sondern auch ein Anschlussstück für Pfosten, welches mit dem eigentlichen Pfosten verbunden werden kann, also ein Fußstück. Als Anschlussstück dienen üblicherweise 7-30 cm, vorzugsweise 10-20 cm lange Hohlprofile, in die die Pfosten eingesetzt werden können, gegebenenfalls unter Zuhilfenahme von Verriegelungselementen, die ein unbeabsichtigtes Herausziehen des Pfostens aus dem Profil verhindern, Verankerungsmittel im Sinne der Erfindung sind alle Bauteile, die eine feste Verbindung mit dem Untergrund, beispielsweise der Betondecke oder -wand, eingehen können, also insbesondere Schrauben, Schrauben mit Spreizdübeln etc..

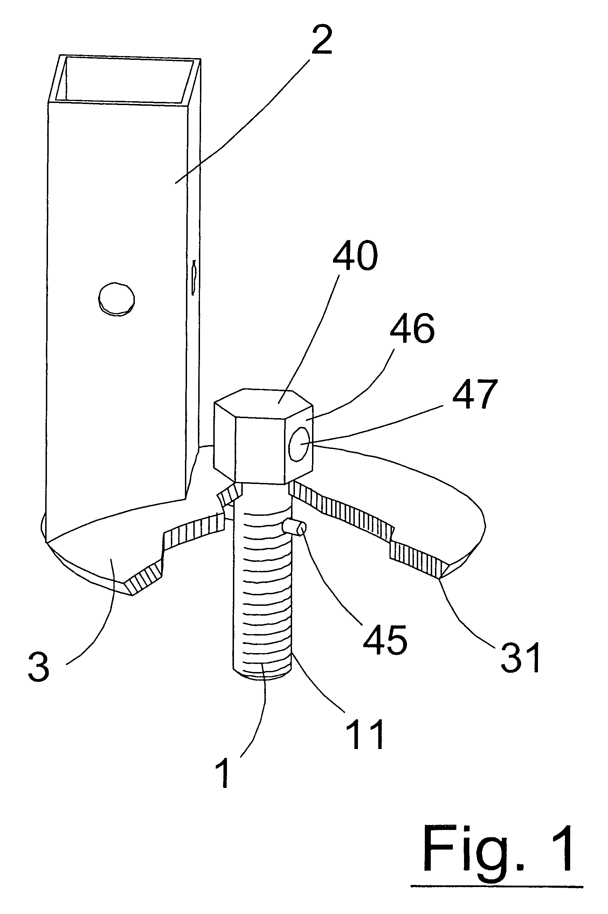

Spannmittel im Sinne der Erfindung können alle diejenigen Bauteile sein, die geeignet sind, den Pfosten in Richtung auf den Untergrund zu bewegen um eine Verspannung aufzubauen bzw. aufrecht zu erhalten, Abgesehen von den später in Fig. 1 und Fig, 2 dargestellten Spannmitteln "Schraube" und "Keil" kommen alle andere dem Fachmann geläufigen Methoden wie z.B. Exenter und Hebel in Betracht. Dabei ist erfindungsgemäß lediglich zu beachten, dass die Verspannung unabhängig vom Verdrehen des Pfosten erfolgen kann. Es fällt natürlich unter die Erfindung, dass die Verbindung zwischen Untergrund und Verankerungsmittel zunächst auch durch Verdrehen des Pfostens erfolgen darf. Wichtig ist lediglich, dass das eigentliche Fixieren, d.h. das spielfreie Verbinden von Pfosten und Untergrund, ohne Verdrehen des Pfostens erfolgen kann.

Die Anordnung der Verankerungsmittel beziehungsweise Spannmittel neben dem Pfosten hat den Vorteil einer leichteren Zugänglichkeit beim Herstellen der Verankerung und beim Verspannen derselben,

Eine insbesondere tellerförmige Verbreitung der Unterseite des Pfostens erhöht die Grundfläche und damit die Standsicherheit des Pfostens, wodurch geringere Spannkräfte benötigt werden. Wenn dabei die Verbreiterung symmetrisch zum Verankerungsmittel beziehungsweise Spannmittel verläuft, erfolgt eine symmetrische Krafteinleitung in den Untergrund und die Standsicherheit erhöht sich. Aus statischen Gründen ist es also vorteilhaft das Spannelement in der Mitte des Tellers anzuordnen, Wenn der Pfosten auch in der Mitte auf dem Teller befestigt wäre, ergeben sich jedoch die bekannten Probleme bei der Bedienung des Spannelementes, z, B. Schraube. Durch das erfindungsgemäße Versetzen des Pfostens an den Tellerrand wird jedoch das Verankerungs- bzw, Spannmittel wieder zugänglich und kann unabhängig von der Ausrichtung des Pfostens für eine spielfreie Befestigung sorgen, Ein angesetztes Hebelwerkzeug kann also leicht um 270° in einem Zug eine Schraube festziehen. Die bekannte Ausführung mit den zentrisch angeordneten Schrauben und Pfosten lösen das Problem durch die drehfeste Verbindung der Bauteile miteinander, Dadurch entsteht dann aber der bereits erläuterte unangenehme Effekt des beim anschließenden Ausrichten des Bauteils entstehenden Spiels,

In einer besonders preiswerten, leicht bedienbaren und herstellbaren Ausgestaltung sind Verankerungs- und Spannmittel als Schraube ausgebildet. Das Gewindeteil dient der Verankerung im Untergrund und der Schraubenkopf drückt von oben gegen eine entsprechende Anschlagfläche des Pfosten beziehungsweise der damit verbundenen Verbreiterung,

Eine Öffnung in der Verbreiterung zum Durchführen und gegebenenfalls Halten der Schraube ist eine besonders preiswerte Gestaltungsmöglichkeit und ermöglicht den Einsatz einer Verliersicherung für die Schraube, die somit drehbar, aber fest mit dem Pfosten verbunden ist.

Ein quer zur Schraubenachse verlaufender Durchbruch durch den Schraubenkopf z. B. in Gestalt einer Bohrung ermöglicht kräftesparend den Einsatz eines Hebelwerkzeuges beim Herstellen der Verspannung. Wenn der Schraubenkopf dabei als Mutter, Schlitz- oder Kreuzschraube oder dergleichen ausgeführt ist, kann die Schraube zunächst durch normales Standardwerkzeug bequem und schnell in den Untergrund geschraubt werden und der umständlicher zu handhabende Hebel kommt erst auf den letzten Gewindegängen zum Herstellen der Verspannung zum Einsatz.

Als besonders preiswertes Bauteil kann ein Keil als Spannmittel eingesetzt werden. Darüber hinaus ist die Bedienung besonders einfach, da durch einen einfachen seitlichen Schlag auf den Keil eine Verspannung herbeigeführt beziehungsweise gelöst werden kann. Durch entsprechende Auswahl der Steigung der Keilflächen können sehr hohe Spannungen herbeigeführt werden, so dass die Pfosten einen sicheren Halt haben,

In einer besonders preiswert herzustellenden Ausgestaltung sind für den Keil Öffnungen im Pfosten und dem Verankerungsmittel vorgesehen, durch die der Keil hindurchgeführt wird, Dadurch sind Pfosten und Keil montageerleichternd verbunden, Beim Einschlagen des Keils zum Fixieren der Verbindung drückt dieser gegen die Unterseite der Öffnungen im Pfosten, die vorzugsweise symmetrisch zu beiden Seiten des Pfostens vorgesehen sind, und gegen die Oberseite der Öffnung im Verankerungsmittel. Das Verankerungsmittel und Spannmittel ist also vorzugsweise im Inneren des Pfostens geführt, was die Mechanik vor Verschmutzung und Beschädigung schützt,

Eine Verliersicherung am Keil, z, B. Querbolzen, randseitige Überhöhungen, erleichtert die Lagerhaltung, minimiert Verluste bei der Demontage, erleichtert die Montage, da keine Teile zusammengeführt werden müssen und dient der Sicherheit, da jederzeit eine schlimmstenfalls spielbehaftete, aber dennoch sichere, Verbindung des Pfostens mit dem Boden besteht,

Eine Verbreiterung der Unterseite des Pfostens z.B. durch einen Teller erhöht die Standsicherheit bei gleichbleibenden Spannkräften,

Wenn als Verankerungsmittel ein Bauteil mit Gewinde vorgesehen wird, kann auf bewährte Befestigungstechniken (z, B. Dübel-Schraubenverbindung) zurückgegriffen werden. Der durch die als Schraube ausgebildeten Verankerungsmittel geführte Keil hat darüber hinaus den Vorteil, dass er Drehkräfte vom Pfosten auf das Verankerungsmittel übertragen kann, Bei der Montage wird also der Pfosten so lange gedreht bis die Unterseite des Pfostens beziehungsweise der Verbreitung gegen den Untergrund drückt. Dann wird der Pfosten ausgerichtet, so dass die Horizontalelemente eingesetzt werden können, Erst dann wird durch einen Schlag auf den Keil eine Verspannung herbeigeführt, so dass der Pfosten ohne zu Wackeln steht, Wenn der Pfosten fest über den Keil mit dem Verankerungsmittel verbunden ist erleichtert sich die Montage und Demontage, da keine Einzelteile zusammen geführt und bereitgehalten werden müssen

Die axiale Anordnung aller Bauteile des erfindungsgemäßen Pfostenbefestigungsmittels sorgt für eine einfache Handhabbarkeit und platzsparende Lagerung.

Da die Verankerungsmittel und Spannmittel nicht relativ zum Pfosten drehbar sind, können die Verankerungsmittel bequem in den Untergrund eingeschraubt werden, beispielsweise durch Drehen des gesamten Pfosten z.B. im Stehen, Falls der Pfosten nur als Adapterstück zum Einsetzen eines weiteren Pfostens ausgebildet ist, kann es von Vorteil sein, zunächst den Pfosten einzusetzen um dann bequem im Stehen die Verankerungsmittel durch Drehen der gesamten Konstruktion einschrauben zu können.

Das Vorsehen einer kreisrunden Verbreitung, vorzugsweise als umgedrehter Teller mit gegen den Untergrund drückenden Tellerrand, erleichtert die Montage und das Ausrichten, im Verhältnis zu einer rechteckigen Verbreiterung. Der kreisrunde Tellerrand ist leichter gegen den Untergrund zu verdrehen, insbesondere wenn dieser baustellentypisch uneben ist.

Wenn die Befestigungsmittel lediglich als Pfosten ein Adapterstück für das Einsetzen und Verriegeln des eigentlichen Pfostens aufweisen, ergibt sich eine höhere Flexibilität und verringerte Lagerhaltung, da mit einem gemeinsamen Adapterstück eine Vielzahl von unterschiedlichen Pfosten beispielsweise mit unterschiedlicher Länge, montiert werden können,

Dabei sind hohle Vierkant oder Rundprofile bevorzugt, da diese preiswerte Standardbauteile sind,

Weitere Vorteile ergeben sich aus der folgenden Beschreibung und der beigefügten Zeichnung, Ebenso können die vorstehend genannten und noch weiter ausgeführten Merkmale erfindungsgemäß jeweils einzeln oder in beliebigen Kombinationen miteinander verwendet werden, Die erwähnten Ausführungsbeispiele sind nicht abschließend zu verstehen und haben beispielhaften Charakter,

**Fig. 1** zeigt eine erste Ausgestaltung der Erfindung mit asymmetrisch zum Verankerungsmittel 1 angeordneten Pfosten 2. Die tellerförmige Verbreiterung 3 ist nach unten geöffnet und bildet somit einen Rand 31, der auf dem nicht dargestellten Untergrund aufliegt, Durch Anziehen des mittig durch den Teller geführten Verankerungsmittels 1 , welches als Schraube mit einem als Spannelement 40 dienenden Sechskantmutterkopf ausgebildet ist, wird der Teller 3 gegen den Untergrund gedrückt. Mit zunehmender Verspannung durch Einschrauben des Gewindeteils 1 1 in den Untergrund wird der gewölbte Teller 3 Eigenspannungen aufbauend zusammengedrückt und sorgt somit für eine Verspannung, die dem Pfosten zusätzliche Stabilität verleiht.

Im oberen Abschnitt des Gewindeteils 1 1 der Schraube 1 ist ein Querbolzen 45 als Verliersicherung vorgesehen, der wie der Schraubenkopf 40 ein Herausfallen der Schraube 1 aus der mittig vorgesehenen Öffnung im Teller 3 verhindert, Senkrecht zur Schraubenachse des Schraubenkopfs 46 ist eine Bohrung 47 vorgesehen, die mittels eines nicht dargestellten Hebelinstruments ein besonders festes Anziehen der Schraube auf den letzten Gewindegängen ermöglicht, damit der Pfosten 2 besonders standsicher steht.

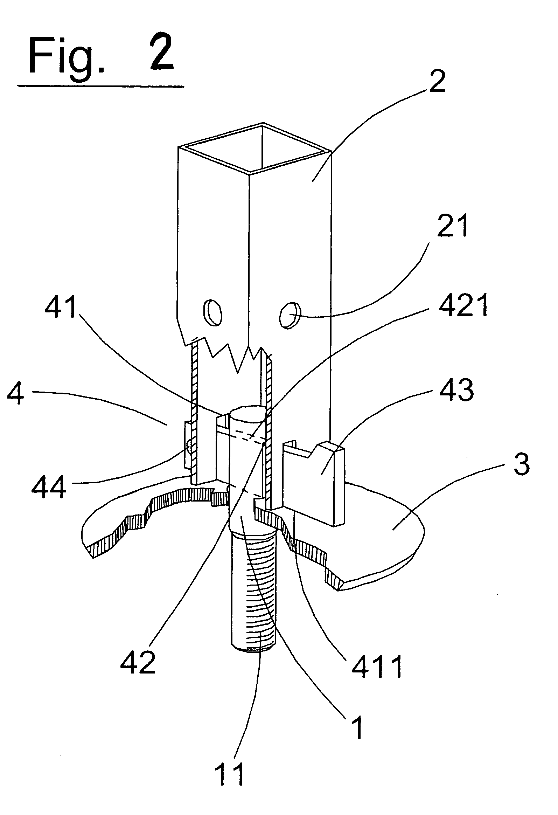

**Fig. 2** erläutert eine alternative Ausgestaltung der Erfindung mit keilförmigen Spannmitteln 4. Die Verankerungsmittel 1 , der Pfosten 2 und der Teller 3 entsprechen dabei in Funktion und Benennung den aus Fig, 1 erläuterten Bauteilen. Abweichend davon ist jedoch das Verankerungsmittel 1 nicht drehbar gegen den Pfosten 2, Dies wird verhindert durch einen quer durch den Pfosten 2 und den oberen Teil des Verankerungsmittels 1 geführten Keil 43. Beim Drehen des Pfosten 2 wird daher das Verankerungsmittel 1 mitgedreht, so dass sich dessen Gewindeteil 1 1 in die nicht dargestellte Bohrung des Untergrunds hereindrehen lässt, Nach dem nahezu vollständigen Hereindrehen des Gewindes 1 1 in den Untergrund wird durch Hereintreiben des Keils 43, dessen schräger oberer Steg gegen die Oberseite 421 der Öffnung 42 im Verankerungsmittel 1 und dessen unterer Steg gegen die Unterseite 41 1 der Öffnungen 41 im Pfosten drückt, das Verankerungsmittel 1 in den Pfosten 2 gezogen und somit eine den festen Stand ermöglichende Verspannung aufgebaut.

Eine Verliersicherung am Keil 43 ist an einem Ende als Querbolzen 44 und am anderen Ende als randseitige Überhöhung, die ein Herausrutschen durch die Öffnungen 42,41 verhindern, vorgesehen,

Der Pfosten in Fig. 1 und Fig. 2 ist lediglich als Anschlussstück für einen einzusetzenden Pfosten aus einem Vierkant-Profil ausgebildet, wobei Löcher 21 für eine pfostenseitige Einrastsicherung vorgesehen sind,

## Patentansprüche

1. Befestigungsmittel für Pfosten an Flächen, insbesondere zum Halten einer geländerartigen provisorischen Absturzsicherung auf Baustellen, mit
- Verankerungsmitteln (1), derart ausgestaltet, dass sie in der Fläche, insbesondere einem Fußboden, einer Wand und/oder Decke, vorzugsweise aus Beton, verankert werden können,
- einem mit dem Verankerungsmittel (1) verbindbaren oder verbundenen Pfosten (2),
- Spannmitteln (4,40) zum Fixieren des Pfostens gegen die Fläche durch Zug an den Verankerungsmitteln, wobei die Spannmittel (4,40) derart sind, dass das Fixieren gegen die Fläche ohne Verdrehen des Pfostens erfolgen kann, wobei
die Verankerungsmittel (1) und/oder Spannmittel (40) neben dem Pfosten vorgesehen sind und
der Pfosten (2) an seiner Unterseite eine Verbreiterung (3) aufweist, die beim Fixieren durch die Spannmittel gegen die Fläche gepresst werden kann,
**dadurch gekennzeichnet, dass**
die Verbreiterung (3) symmetrisch zum Verankerungsmittel(1) und Spannmittel (40) verläuft
und/oder
der Pfosten am Rand der Verbreiterung, insbesondere neben dem Spannmittel, angeordnet ist.

2. Befestigungsmittel nach einem der vorherigen Ansprüche, **dadurch gekennzeichnet, dass** die Verankerungsmittel (1) und/oder Spannmittel (40) drehbar relativ zum Pfosten sind.

3. Befestigungsmittel nach einem der vorherigen Ansprüche, **dadurch gekennzeichnet, dass** die Verankerungsmittel (1) und Spannmittel (40) als Schraube ausgebildet sind, wobei der Gewindeteil (11) das Verankerungsmittel bildet und der Schraubenkopf (46) das Spannmittel bildet.

4. Befestigungsmittel nach einem der vorherigen Ansprüche, **dadurch gekennzeichnet, dass** die Verbreiterung eine Öffnung, durch die die Schraube geführt ist, aufweist.

5. Befestigungsmittel nach einem der vorherigen Ansprüche, **dadurch gekennzeichnet, dass** im fixierten Zustand der Schraubenkopf mit seiner Unterseite gegen die Oberseite der Verbreiterung drückt.

6. Befestigungsmittel nach einem der vorherigen Ansprüche, **dadurch gekennzeichnet, dass** der Schraubenkopf einen quer zur Schraubenachse verlaufenden Durchbruch, insbesondere Bohrung (47), aufweist, derart, dass mit einem stangenförmigen Werkzeug als Hebel die Schraube angezogen werden kann.

7. Befestigungsmittel nach einem der vorherigen Ansprüche, **dadurch gekennzeichnet, dass** als Verankerungsmittel ein Bauteil mit Gewinde vorgesehen ist, derart, dass das Gewinde in der Fläche, gegebenenfalls über einen in die Fläche eingesetzten Dübel, verankert werden kann.

8. Befestigungsmittel nach einem der vorherigen Ansprüche, **dadurch gekennzeichnet, dass** die Verbreiterung (3) rund ist und vorzugsweise als Teller derart ausgebildet ist, dass der Tellerrand gegen die Fläche drücken kann und/oder
eine Verliersicherung (44,45) an den Spannmitteln (4,40) vorgesehen ist und/oder
als Pfosten ein Adapterstück zum Einsetzen und Verriegeln eines Profils vorgesehen ist und/oder
das Adapterstück ein hohles Vierkant- oder Rundprofil ist.

## Claims

1. Fastening means for posts on surfaces, in particular for holding a railing-like provisional fall protection on building sites, comprising
- anchoring means (1), formed so as to be anchorable in the surface, in particular a floor, a wall and/or a ceiling, preferably of concrete,
- a post (2) that is connectable or connected with the anchoring means (1),
- tightening means (4, 40) for fixing the post against the surface by means of tension on the anchoring means, the tightening means (4, 40) being such that fixing against the surface can take place without rotating the post, wherein
the anchoring means (1) and/or the tightening means are provided next to the post and
wherein the post (2) has on its underside a widened portion (3), which can be pressed against the surface during fixing by means of the tightening means,
**characterized in that**
the widened portion (3) is symmetrical to the anchoring means (1) and the tightening means (40)
and/or
the post is disposed on the edge of the widened portion, in particular next to the tightening means.

2. Fastening means according to one of the preceding claims, **characterized in that** the anchoring means (1) and/or tightening means (40) are rotatable relative to the post.

3. Fastening means according to one of the preceding claims, **characterized in that** the anchoring means (1) and the tightening means (40) are formed as a bolt, the threaded portion (11) forming the anchoring means and the bolt head (46) forming the tightening means.

4. Fastening means according to one of the preceding claims, **characterized by** the widened portion having an opening through which the bolt is guided.

5. Fastening means according to one of the preceding claims, **characterized in that**, in the fixed state, the bolt head, with its underside, presses against the top side of the widened portion.

6. Fastening means according to one of the preceding claims, **characterized in that** the bolt head has a break-through, in particular bore (47), transversal relative to the axis of the bolt, such that the bolt can be tightened with a rod-shaped tool as a lever.

7. Fastening means according to one of the preceding claims, **characterized in that** a part having a thread is provided as anchoring means, such that the thread can be anchored in the surface, if necessary through a plug inserted in the surface.

8. Fastening means according to one of the preceding claims, **characterized in that** the widened portion (3) is round and is preferably formed as a plate, such that the edge of the plate can press against the surface, and/or
that a securing element (44, 45) is provided on the tightening means (4, 40), and/or
that an adapter piece for inserting and locking a profile is provided as post, and/or
the adapter piece is a hollow square or round profile.

## Revendications

1. Moyen de fixation de montants à des surfaces, notamment pour maintenir un dispositif provisoire de protection contre les chutes de type garde-fou sur des chantiers, ledit moyen de fixation comportant
- des moyens d'ancrage (1) conformés de façon à pouvoir être ancrés dans la surface, notamment dans un sol, une paroi et/ou un plancher, avantageusement en béton,
- un montant (2) relié ou pouvant être relié au moyen d'ancrage (2),
- des moyens de serrage (4, 40) permettant de fixer le montant par rapport à la surface par traction exercée sur les moyens d'ancrage, les moyens de serrage (4, 40) étant tels que la fixation par rapport à la surface peut être effectuée sans faire tourner le montant,
les moyens d'ancrage (1) et/ou les moyens de serrage (40) étant prévus à côté du montant et
le montant (2) comportant sur son côté inférieur un élargissement (3) qui peut être pressé par les moyens de serrage contre la surface lors de la fixation,
**caractérisé en ce que**
l'élargissement (3) s'étend symétriquement par rapport au moyen d'ancrage (1) et au moyen de serrage (40)
et/ou
le montant est placé au bord de l'élargissement, notamment à côté du moyen de serrage.

2. Moyen de fixation selon l'une des revendications précédentes, **caractérisé en ce que** les moyens d'ancrage (1) et/ou les moyens de serrage (40) peuvent tourner par rapport au montant.

3. Moyen de fixation selon l'une des revendications précédentes, **caractérisé en ce que** les moyens d'ancrage (1) et/ou les moyens de serrage (40) sont conformés en vis, la partie filetée (11) formant le moyen d'ancrage et la tête de vis (46) formant le moyen de serrage.

4. Moyen de fixation selon l'une des revendications précédentes, **caractérisé en ce que** l'élargissement comporte une ouverture traversée par la vis.

5. Moyen de fixation selon l'une des revendications précédentes, **caractérisé en ce que**, à l'état fixé, la tête de vis presse par son côté inférieur contre le côté supérieur de l'élargissement.

6. Moyen de fixation selon l'une des revendications précédentes, **caractérisé en ce que** la tête de vis comporte un passage, notamment un perçage (47), s'étendant transversalement à l'axe de la vis de telle sorte que la vis peut être vissée avec un outil en forme de barre en tant que levier.

7. Moyen de fixation selon l'une des revendications précédentes, **caractérisé en ce que** l'on utilise comme moyen d'ancrage un composant doté d'un filet de sorte que le filet peut être ancré dans la surface, le cas échéant par l'intermédiaire d'une cheville insérée dans la surface.

8. Moyen de fixation selon l'une des revendications précédentes, **caractérisé en ce que**
l'élargissement (3) est rond et conformé avantageusement en assiette de sorte que le bord de l'assiette peut être pressé contre la surface et/ou
un dispositif de sécurité empêchant la perte (44, 45) est prévu sur les moyens de serrage (4, 40) et/ou
l'on utilise comme montant une pièce d'adaptation destinée à l'insertion et au verrouillage d'un profilé et/ou
la pièce d'adaptation est un profilé creux rond ou quadrangulaire.
